# EUROPEAN PATENT SPECIFICATION

(11) **EP 3 690 502 B1**
(45) Date of publication and mention of the grant of the patent: **05.01.2022**
(21) Application number: 18861301.2
(22) Date of filing: 27.09.2018
(51) Int. Cl.: G02B 5/22, G02C 7/10, B29D 11/00, G02B 1/04, G02B 1/10

(54) **OPTICAL SHEET AND OPTICAL COMPONENT**
OPTISCHE FOLIE UND OPTISCHE KOMPONENTE
FEUILLE OPTIQUE ET COMPOSANT OPTIQUE

(30) Priority: 29.09.2017 JP 2017192231; 29.09.2017 JP 2017192232; 11.05.2018 JP 2018092605
(43) Date of publication of application: 05.08.2020
(60) Divisional application: 21210340.2
(73) Proprietor: SUMITOMO BAKELITE CO., LTD., Tokyo 140-0002 (JP)
(72) Inventor: OYAMA, Takuya, Tokyo 140-0002 (JP); ISHIKAWA, Tetsuya, Tokyo 140-0002 (JP)
(74) Representative: Ter Meer Steinmeister & Partner
(86) International application number: PCT/JP2018/036149
(87) International publication number: WO 2019/065926

(56) References cited:
- EP-A1- 2 436 731
- EP-A1- 2 889 655
- JP-A- 2012 219 169
- JP-A- 2012 219 169
- JP-A- 2012 226 078
- JP-A- 2012 226 078
- JP-A- 2016 104 839

## Description

### Technical Field

The present invention relates to an optical sheet and an optical component.

### Background Art

For example, there is known an optical sheet that absorbs a specific wavelength range from incident light for the purpose of enhancing the contrast of a visual field or preventing glare (for example, refer to PTL 1). This optical sheet is used by being attached to eyeglasses, sunglasses, sun visors, and the like.

The optical sheet disclosed in PTL 1 includes a resin material and a dye (light absorbing agent) that is contained in the resin material and absorbs light of a specific wavelength out of light in a visible light region, for example. This optical sheet is mold into a sheet shape by mixing a dye in a molten resin material, performing extrusion molding in the state, and then cooling thereof, for example.

EP 2 436 731 A1 relates to a resin composition comprising a polycarbonate resin (component A), an ester (component B) of pentaerythritol and an aliphatic carboxylic acid, an epoxy compound (component C), an ultraviolet absorbent (component D), and a phosphorus stabilizer (component E) . A light absorbing agent having a melting point of 300 °C to 400°C or a polycarbonate having a melt flow rate of 3 g/10 min to 25 g/10 min are not disclosed. JP 2012 219169 A relates to a thermoplastic resin composition for spectacle lenses and a spectacle lens obtained by molding the thermoplastic resin composition for spectacle lenses. A light absorbing agent having a melting point of 300 °C to 400°C, a polycarbonate having a viscosity average molecular weight Mv of 24,00 to 27,500 or a polycarbonate having a melt flow rate of 3 g/10 min to 25 g/10 min are not disclosed.

JP 2012 226078 relates to a polarizing film including a continuous phase formed of a first transparent resin and a dispersed phase formed of a second transparent resin, wherein the dispersed phase is plate-shaped and the plate surface of the dispersed phase is a plate.

EP 2 889 655 A1 relates to a polarizing sheet that is obtained from the polarizing film produced by the method, a polarizing lens obtained by curving the sheet to make curved surfaces, or an aromatic polycarbonate polarizing lens obtained by injecting an aromatic polycarbonate into one side of the curved surfaces.

However, depending on the type of the resin material or the dye, the dye may aggregate at a time of molding, and the dye may partially aggregate after molding. In addition, in order to suppress the aggregation of the dye, for example, it is considered to sufficiently mix the resin material and the dye by relatively reducing a molecular weight of the resin material and increasing the fluidity in a molten state, for example. However, in this case, sufficient strength after molding may not be obtained.

Thus, it is difficult to achieve both the prevention of aggregation of the dye aggregation and the high strength.

### Citation List

### Patent Literature

[PTL 1] WO2014/115705

### Summary of Invention

### Technical Problem

An object of the present invention is to provide an optical sheet and an optical component that prevent aggregation of a light absorbing agent and have sufficient strength.

### Solution to Problem

Such an object is achieved by the present invention as defined by the appended claims.

### Advantageous Effects of Invention

According to the present invention, it is possible to provide an optical sheet that prevents aggregation of a light absorbing agent and has sufficient strength.

### Brief Description of Drawings

FIG. 1 is a perspective view of a sunglass including an optical sheet (first embodiment) of the present invention.
FIG. 2 is a perspective view of a sun visor including the optical sheet (first embodiment) of the present invention.
FIG. 3 is a side view schematically showing an optical sheet manufacturing apparatus for manufacturing the optical sheet shown in FIG. 1.
FIG. 4 is a sectional view schematically showing an optical component manufacturing apparatus for manufacturing the optical sheet optical component shown in FIG. 1.
FIG. 5 is a sectional view of the optical component shown in FIG. 1.
FIG. 6 is a sectional view of an optical component including an optical sheet (second embodiment) of the present invention.

### Description of Embodiments

Hereinafter, an optical sheet and an optical component of the present invention will be described in detail based on preferable embodiments shown in the accompanying drawings.

### <First embodiment>

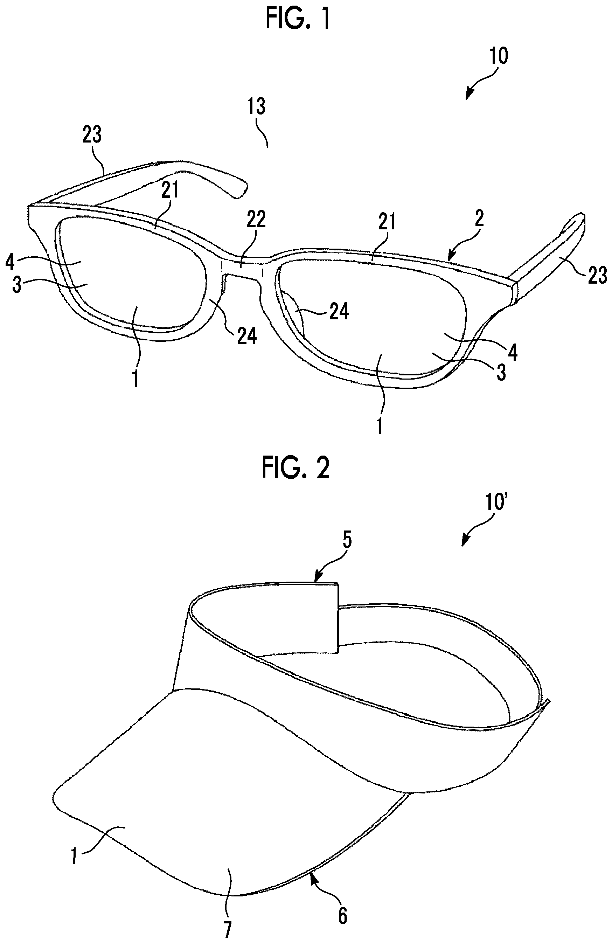

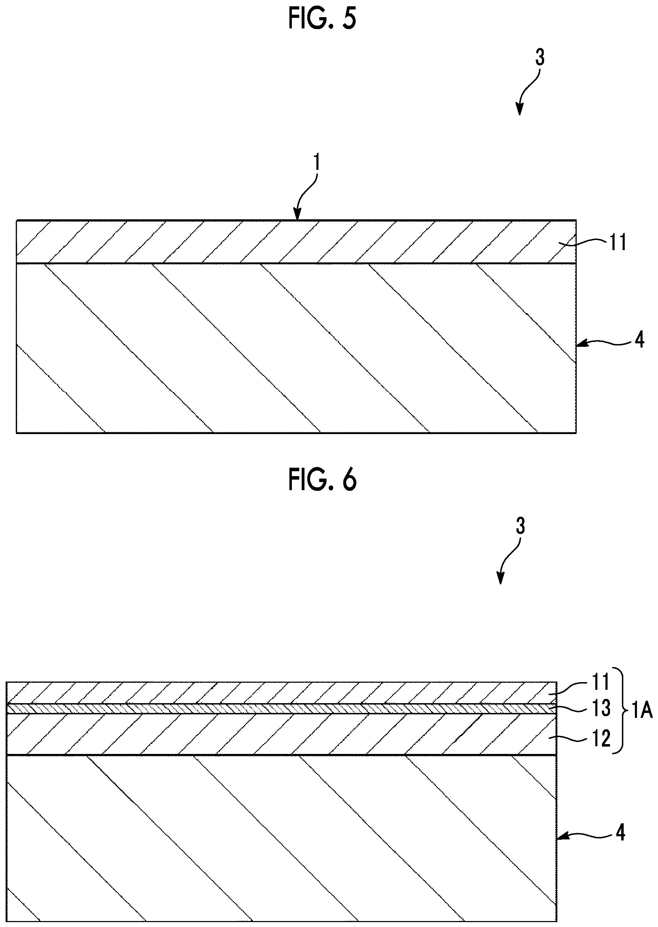

FIG. 1 is a perspective view of a sunglass including the optical sheet (first embodiment) of the present invention. FIG. 2 is a perspective view of a sun visor including the optical sheet (first embodiment) of the present invention. FIG. 5 is a sectional view of the optical component shown in FIG. 1.

In FIGS. 1, 2, and 5 (the same applies to FIG. 6), an upper side is referred to as "upper direction" or "upper", and a lower side is also referred to as "lower direction" or "lower". In addition, in the drawings referred to in the present specification, dimensions in a thickness direction are exaggeratedly illustrated, and are significantly different from actual dimensions.

An optical sheet 1 of the present invention shown in FIGS. 1, 2, and 5 includes a specific wavelength absorption layer 11 as specified in appended claim 1.

With this, the optical sheet 1 can absorb light in a specific wavelength range out of visible light. In addition, since the viscosity average molecular weight Mv of the polycarbonate is as claimed, for example, at a time of extrusion molding, extrusion molding can be performed in a state where the polycarbonate and the light absorbing agent are sufficiently mixed with each other. Therefore, it is possible to prevent a state where the light absorbing agent is excessively aggregated after molding. In addition, since the viscosity average molecular weight Mv of the polycarbonate is as claimed, the optical sheet has sufficient strength. As described above, the optical sheet 1 of the present invention prevents aggregation of an optical absorbing agent and has sufficient strength.

Such optical sheet 1 is used for a sunglass (optical component 10) shown in FIG. 1 and a sun visor (optical component 10') shown in FIG. 2.

As shown in FIG. 1, the sunglass (optical component 10) includes a frame 2 mounted on a user's head, and a lens 3 with an optical sheet (optical component) fixed to the frame 2. In the present specification, the term "lens" includes both of a lens having a light collecting function and a lens not having a light collecting function.

As shown in FIG. 1, the frame 2 is mounted on the head of the user, and includes a rim portion 21, a bridge portion 22, a temple portion 23 that can be hung on the user's ear, and a nose pad portion 24. Each rim portion 21 has a ring shape, and is a portion where the lens 3 with an optical sheet is mounted inside.

The bridge portion 22 is a portion that connects each rim portion 21. The temple portion 23 has a vine shape and is connected to an edge of each rim portion 21. The temple portion 23 is a portion that can be hung on the user's ear. The nose pad portion 24 is a portion that comes into contact with the user's nose in a mounting state in which the sunglass (optical component 10) is mounted on the user's head. With this, it is possible to reliably maintain the mounting state.

A shape of the frame 2 is not limited to the illustrated one as long as the frame 2 can be mounted on a user's head.

The optical component of the present invention includes a lens 4 (substrate) and an optical sheet 1 laminated on a surface of the lens 4 on the front side (side opposite to human eyes in a mounted state) . With this, it is possible to exhibit a function as a sunglass while enjoying advantages of the optical sheet 1 described above.

As shown in FIG. 2, the sun visor (optical component 10') includes a ring-shaped mounting portion 5 mounted on a user' s head and a collar 6 provided in front of the mounting portion 5. The collar 6 includes a light transmitting member 7 (substrate) and the optical sheet 1 provided on an upper surface of the light transmitting member 7. With this, it is possible to exhibit a function as a sun visor while enjoying advantages of the optical sheet 1 described above.

Constituent materials of the lens 4 and the light transmitting member 7 are not particularly limited as long as the materials have light transmitting properties, and include various resin materials or various glasses. However, the material is preferably the same polycarbonate as the polycarbonate of the optical sheet 1. With this, it is possible to enhance adhesion between the lens 4 or the light transmitting member 7 and the optical sheet 1.

Hereinafter, the optical sheet 1 will be described in detail. In the following, a case of being laminated on the lens 4 (substrate) will be representatively described.

As shown in FIG. 5, the optical sheet 1 includes a specific wavelength absorption layer 11. The specific wavelength absorption layer 11 contains a light absorbing agent and an ultraviolet absorbing agent, using polycarbonate as a main material.

### <Polycarbonate>

The aromatic polycarbonate includes an aromatic ring in the main chain, and with this, strength of the optical sheet 1 can be further improved.

The aromatic polycarbonate is synthesized by an interfacial polycondensation reaction between bisphenol and phosgene, an ester exchange reaction between bisphenol and diphenyl carbonate, and the like, for example.

Examples of the bisphenol include bisphenol A, bisphenol (modified bisphenol) which is a source of a repeating unit of the polycarbonate represented by the following formula (1), or the like, for example. 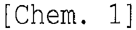 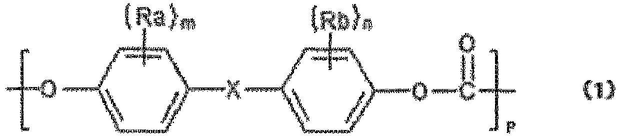 (In the formula (1) , X is an alkyl group having 1 to 18 carbon atoms, an aromatic group, or a cycloaliphatic group, Ra and Rb each independently are an alkyl group having 1 to 12 carbon atoms, m and n each independently are an integer of 0 to 4, and p is the number of repeating units.)

Specific examples of the bisphenol that is a source of the repeating unit of the polycarbonate represented by the formula (1) include 4,4'-(pentane-2,2-diyl)diphenol,
4,4'-(pentane-3,3-diyl)diphenol,
4,4'-(butane-2,2-diyl)diphenol,
1,1'-(cyclohexanediyl)diphenol,
2-cyclohexyl-1,4-bis(4-hydroxyphenyl)benzene,
2,3-biscyclohexyl-1,4-bis (4-hydroxyphenyl)benzene, 1,1'-bis
(4-hydroxy-3-methylphenyl)cyclohexane, 2,2'-bis
(4-hydroxy-3-methylphenyl)propane, and the like, and one or two
or more of these can be used in combination.

In particular, the polycarbonate is a bisphenol type polycarbonate having a skeleton derived from bisphenol as a main component. By using such a bisphenol type polycarbonate, the optical sheet 1 exhibits further excellent strength.

Such a polycarbonate has a viscosity average molecular weight Mv of 24,000 to 27,500. With this, it is possible to sufficiently enhance the strength of the optical sheet 1. In addition, in a molten state of the polycarbonate, it is possible to sufficiently enhance the fluidity. Accordingly, in a case where the optical sheet 1 is manufactured by extrusion molding, for example, it is possible to perform extrusion molding in a state where the polycarbonate in the molten state and the light absorbing agent are sufficiently mixed with each other. Therefore, it is possible to prevent a state where the light absorbing agent is excessively aggregated after molding. In addition, since the viscosity average molecular weight Mv of the polycarbonate is 24,000 to 27,500, the optical sheet has sufficient strength. As described above, the optical sheet 1 of the present invention prevents aggregation of an optical absorbing agent and has sufficient strength.

In a case where the viscosity average molecular weight Mv of the polycarbonate is too small, sufficient strength cannot be obtained after molding. On the other hand, in a case where the viscosity average molecular weight Mv of the polycarbonate is too large, it is not possible to sufficiently enhance the fluidity in a molten state. For this reason, the mixing of the polycarbonate in the molten state and the light absorbing agent becomes insufficient.

In addition, polycarbonate has a melt flow rate (MFR) of 3 g/10 min to 25 g/10 min measured in accordance with JIS K7210. With this, it is possible to sufficiently enhance the fluidity of polycarbonate in a molten state. Therefore, for example, in a case of manufacturing the optical sheet 1 by extrusion molding, it is possible to perform extrusion molding in a state where the polycarbonate in a molten state and the light absorbing agent are sufficiently mixed with each other.

In addition, polycarbonate preferably has a water absorption rate of 0.02% to 0.2%, and more preferably has a water absorption rate of 0.04% to 0.15%. With this, it is possible to perform extrusion molding in a state where the polycarbonate in a molten state and the light absorbing agent are sufficiently mixed with each other. Therefore, it is possible to prevent the light absorbing agent from being excessively aggregated.

In addition, the water absorption rate in the present specification is a value measured by Aquatrac 3E (manufactured by Brabender Corporation).

In addition, a content of polycarbonate in the specific wavelength absorption layer 11 is preferably 87 wt% to 99.949 wt%, and more preferably 90 wt% to 99.87 wt%. With this, it is possible to reliably exhibit the effect of the present invention.

### <Light absorbing agent>

The light absorbing agent absorbs light of a specific wavelength. In the present specification, in a case where a value of a maximum absorption wavelength in a visible light region of 420 nm to 780 nm is denoted by λ1, a value on a side having a wavelength 20 nm lower than λ1 is denoted by λ2, and a value on a side having a wavelength 20 nm higher than λ1 is denoted by λ3, the expression "absorb light" means that the absorbance λ1/λ2 or the absorbance λ1/λ3 is 1.0 or more.

The light absorbing agent is not particularly limited as long as the light absorbing agent absorbs light of a specific wavelength out of light in a wavelength range of 350 nm to 780 nm, and examples thereof include a quinoline-based coloring agent, an anthraquinone-based coloring agent, and a perylene-based coloring agent. Among these, one or two or more can be used in combination.

Examples of the quinoline-based coloring agent include alkyl-substituted quinoline compounds such as 2-methylquinoline, 3-methylquinoline, 4-methylquinoline, 6-methylquinoline, 7-methylquinoline, 8-methylquinoline, 6-isopropylquinoline, 2,4-dimethylquinoline, 2,6-dimethylquinoline, and 4,6,8-trimethylquinoline, amine group-substituted quinoline compounds such as 2-aminoquinoline, 3-aminoquinoline, 5-aminoquinoline, 6-aminoquinoline, 8-aminoquinoline, and 6-amino-2-methylquinoline, alkoxy-substituted quinoline compounds such as 6-methoxy-2-methylquinoline and 6,8-dimethoxy-4-methylquinoline, and halogen-substituted quinoline compounds such as 6-chloroquinoline; 4,7-dichloroquinoline, 3-bromoquinoline, and 7-chloro-2-methylquinoline.

By blending such a quinoline-based coloring agent, it is possible to absorb light having a wavelength range of 350 nm to 550 nm out of light incident on the specific wavelength absorption layer 11. It is preferable to have an absorption peak in a wavelength range of 400 nm to 550 nm.

Examples of the anthraquinone-based coloring agent include (1) 2-anilino-1,3,4-trifluoroanthraquinone, (2) 2-(o-ethoxycarbonylanilino)-1,3,4-trifluoroanthraquinone, (3) 2-(p-ethoxycarbonylanilino)-1,3,4-trifluoroanthraquinone, (4) 2-(m-ethoxycarbonylanilino)-1,3,4-trifluoroanthraquinone, (5) 2-(o-cyanoanilino)-1,3,4-trifluoroanthraquinone, (6) 2-(p-cyanoanilino)-1,3,4-trifluoroanthraquinone, (7) 2-(m-cyanoanilino)-1,3,4-trifluoroanthraquinone, (8) 2-(o-nitroanilino)-1,3,4-trifluoroanthraquinone, (9) 2-(p-nitroanilino)-1,3,4-trifluoroanthraquinone, (10) 2-(m-nitroanilino)-1,3,4-trifluoroanthraquinone, (11) 2-(p-tert-butylanilino)-1,3,4-trifluoroanthraquinone, (12) 2-(o-methoxyanilino)-1,3,4-trifluoroanthraquinone, (13) 2-(2,6-diisopropylanilino)-1,3,4-trifluoroanthraquinone, (14) 2-(2,6-dichloroanilino)-1,3,4-trifluoroanthraquinone, (15) 2-(2,6-difluoroanilino)-1,3,4-trifluoroanthraquinone, (16) 2-(3,4-dicyanoanilino)-1,3,4-trifluoroanthraquinone, (17) 2-(2,4,6-tri(loloanilino)-1,3,4-trifluoroanthraquinone, (18) 2-(2,3,5,6-tetrachloroanilino)-1,3,4-trifluoroanthraquinone, (19) 2-(2,3,5,6-tetrafluoroanilino)-1,3,4-trifluoroanthraquinone, (20) 3-(2,3,4,5-tetrafluoroanilino)-2-butoxy-1,4-difluoroanthraquino ne, (21) 3-(4-cyano-3-chloroanilino) -2-octyloxy-1,4-difluoroanthraquinone, (22) 3-(3,4-dicyanoanilino)-2-hexyloxy-1,4-difluoroanthraquinone, (23) 3-(4-cyano-3-chloroanilino)-1,2-dibutoxy-4-fluoroanthraquinon e, (24) 3- (p-cia noanilino)-2-phenoxy-1,4-difluoroanthraquinone, (25) 3-(p-cyanoanilino)-2-(2,6-diethylphenoxy) -1,4-difluoroanthraquinone, (26) 3-(2,6-dichloroanilino)-2-(2,6-dichlorophenoxy)-1,4-difluoroanthraquinone, (27) 3-(2, 3, 5, 6-tetrachloroanilino)-2-(2,6-dimethoxyphenoxy) -1,4-difluoroanthraquinone, (28) 2,3-dianilino-1,4-difluoroanthraquinone, (29) 2,3-bis (p-tert-butylanilino)-1,4-difluoroanthraquinone, (30) 2,3-bis (p-methoxyanilino)-1,4-difluoroanthraquinone, (31) 2,3-bis (2-meth(xy-6-methylanilino)-1,4-difluoroanthraquinone, (32) 2,3-bis(2,6-diisopropylanilino)-1,4-difluoroanthraquinone, (33) 2,3-bis(2,4,6-trichloroanilino)-1,4-difluoroanthraquinone, (34) 2,3-bis(2,3,5,6-tetrachloroanilino)-1,4-difluoroanthraquinone, (35) 2,3-bis(2,3,5,6-tetrafluoroanilino) -1,4-difluoroanthraquinone, (36) 2,3-bis(p-cyanoanilino) -1-methoxyethoxy-4-fluoroanthraquinone, (37) 2-(2,6-dichloroanilino)-1,3,4-trichloroanthraquinone, (38) 2-(2,3,5,6-tetrafluoroanilino)-1,3,4-trichloroanthraquinone, (39) 3- (2,6-dichloroanilino)-2-(2,6-dichlorophenoxy) -1,4-dichloroanthraquinone, (40) 2-(2,6-dichloroanilino) anthraquinone, (41) 2-(2,3,5,6-tetrafluoroanilino)anthraquinone, (42) 3-(2,6-dichloroanilino)-2-(2,6-dichlorophenoxy) anthraquinone, (43) 2,3-bis(2-methoxy-6-methylanilino) -1,4-dichloroanthraquinone, (44) 2,3-bis(2,6-diisopropylanilino) anthraquinone, (45) 2-butylamino-1,3,4-trifluoroanthraquinone, (46) 1,4-bis(n-butylamino)-2,3-difluoroanthraquinone (47) 1,4-bis (n-octylamino)-2,3-difluoroanthraquinone, (48) 1,4-bis (hydroxyethylamino)-2,3-difluoroanthraquinone, (49) 1,4-bis (cyclohexylamino)-2,3-difluoroanthraquinone, (50) 1,4-bis (cyclohexylamino)-2-octyloxy-3-fluoroanthraquinone, (51) 1,2,4-tris(2,4-dimethoxyphenoxy)-3-fluoroanthraquinone, (52) 2,3-bis(phenylthio)-1-phenoxy-4-fluoroanthraquinone, (53) 1,2,3,4-tetra(p-methoxyphenoxy)anthraquinone, and the like.

By blending such an anthraquinone-based coloring agent, it is possible to absorb light having a wavelength of 450 nm to 600 nm out of light incident on the specific wavelength absorption layer 11. It is preferable to have an absorption peak in a wavelength range of 500 nm to 600 nm.

Examples of the perylene-based coloring agent include N,N'-dimethylperylene-3,4,9,10-tetracarboxylic diimide, N,N'-diethylperylene-3,4,9,10-tetracarboxylic diimide, N,N'-bis (4-methoxyphenyl)-perylene-3,4,9,10-tetracarboxylic diimide, N,N'-bis (4-ethoxyphenyl)-perylene-3,4,9,10-tetracarboxylic diimide, N,N'-bis(4-chlorophenyl)-perylene-3,4,9,10-tetracarboxylic diimide, and the like, and particularly preferable examples thereof include N,N'-bis(3,5-dimethylphenyl)-perylene-3,4,9,10-tetracarboxyli c diimide and the like.

By blending such a perylene-based coloring agent, it is possible to absorb light having a wavelength of 400 nm to 800 nm out of the light incident on the specific wavelength absorption layer 11. It is preferable to have an absorption peak in a wavelength range of 600 nm to 780 nm.

By blending the light absorbing agent as described above, it is possible to absorb light in a specific wavelength range. Therefore, for example, the user can clearly recognize the outline of an object or a person in a mounted state, and can enhance safety.

A content of the light absorbing agent (total of each light absorbing agent) in the specific wavelength absorption layer 11 is preferably 0.001 wt% to 5 wt%, and more preferably 0.003 wt% to 4 wt%. With this, it is possible to reliably exhibit the above effect. In a case where the content is too small, the effect as a light absorbing agent may not be sufficiently obtained. On the other hand, in a case where the content is too large, the light absorbing agent tends to be easily aggregated.

### <Ultraviolet absorbing agent>

The ultraviolet absorbing agent absorbs ultraviolet rays (light having a wavelength range of 100 nm to 420 nm).

The ultraviolet absorbing agent is not particularly limited, but examples thereof include a triazine-based compound, a benzophenone-based compound, a benzotriazole-based compound, and a cyanoacrylate-based compound, and one or two or more of these can be used in combination. Among these, a triazine-based compound is particularly preferably used. With this, it is possible to prevent or suppress deterioration of the specific wavelength absorption layer 11 (polycarbonate and light absorbing agent) due to ultraviolet rays and to enhance weather resistance of the optical sheet 1.

Examples of the triazine-based compound include 2-mono (hydroxyphenyl)-1,3,5-triazine compound, 2,4-bis(hydroxyphenyl) -1,3,5-triazine compound, and 2,4,6-tris(hydroxyphenyl) -1,3,5-triazine compound, and specific examples thereof include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy- 4-octyloxyphenyl) -1,3,5-triazine, 2,4-diphenyl-6- (2-hydroxy-4-dodecyloxyphenyl) -1,3,5-triazine, 2,4-diphenyl-6 -(2-hydroxy-4-benzyloxyphenyl) -1,3,5-triazine, 2,4-diphenyl-6- (2-hydroxy-4-butoxyethoxy) -1,3,5-triazine, 2,4-bis (2-hydroxy-4-butoxyphenyl)-6-(2,4-dibutoxyphenyl) -1,3-5-triazine, 2,4,6-tris(2-hydroxy-4-methoxyphenyl)nyl) -1,3,5-triazine, 2,4,6-tris(2-hydroxy-4-ethoxyphenyl) -1,3,5-triazine, 2,4,6-tris(2-hydroxy-4 -propoxyphenyl) -1,3,5-triazine, 2,4,6-tris(2-hydroxy-4-butoxyphenyl) -1,3,5-triazine, 2,4,6-tris(2-hydroxy -4-hexyloxyphenyl) -1,3,5-triazine, 2,4,6-tris(2-hydroxy-4-octyloxyphenyl) -1,3,5-triazine, 2,4,6-tris(2-hydroxy-4-dodecyloxyphenyl) -1,3,5-triazine, 2,4,6-tris(2-hydroxy-4-benzyloxyphenyl) -1,3,5-triazine, 2,4, 6-tris(2-hydroxy-4-ethoxyethoxyphenyl) -1,3,5-triazine, 2,4,6-tris(2-hydroxy-4-butoxyethoxyphenyl) -1,3,5-triazine, 2,4 6-tris(2-hydroxy-4-propoxyethoxyphenyl) -1,3,5-triazine, 2,4,6-tris (2-hydroxy-4-methoxycarbonylpropyloxyphenyl)-1,3,5-triazine, 2,4,6-tris(2-hydroxy-4-ethoxycarbonylethyloxyphenyl) -1,3,5-triazine, 2,4,6-tris (2-hydroxy-4-(1-(2-ethoxyhexyloxy) -1-oxopropan-2-yloxy)phenyl)-1,3,5-triazine, 2,4,6-tris (2-hydroxy-3-methyl-4-methoxyphenyl)-1,3,5-triazine, 2,4,6-tris (2-hydroxy-3-methyl-4-ethoxyphenyl)-1,3,5-triazine, 2,4,6-tris (2-hydroxy-3-methyl-4-propoxyphenyl)-1,3,5-triazine, 2,4,6-tris (2-hydroxy-3-methyl-4-butoxyphenyl)-1,3,5-triazine, 2,4,6-tris (2-hydroxy-3-methyl-4-hexyloxyphenyl)-1,3,5-triazine, 2,4,6-tris (2-hydroxy-3-Methyl-4-octyloxyphenyl)-1,3,5-triazine, 2,4,6-tris (2-hydroxy-3-methyl-4-dodecyloxyphenyl)-1,3,5-triazine, 2,4,6-tris 2-hydroxy-3-methyl-4-benzyloxyphenyl)-1,3,5-triazine, 2,4,6-tris (2-hydroxy-3-methyl-4-ethoxyethoxyphenyl)-1,3,5-triazine, 2,4,6-tris(2-hydroxy-3-methyl-4-butoxyethoxyphenyl) -1,3,5-triazine, 2,4,6-tris(2-hydroxy-3-methyl -4-propoxyethoxyphenyl)-1,3,5-triazine, 2,4,6-tris (2-hydroxy-3-methyl-4-methoxycarbonylpropyloxyphenyl) -1,3,5-triazine, 2,4,6-tris (2-hydroxy-3-methyl-4-ethoxycarbonylethyloxyphenyl) -1,3,5-triazine, 2,4,6-tris(2-hydroxy Ci-3-methyl-4-(1-(2-ethoxyhexyloxy)-1-oxopropan-2-yloxy)phenyl)-1,3,5-triazine, and the like. Examples of commercially available products of triazine-based ultraviolet absorbing agents include "Tinuvin 1577", "Tinuvin 460", "Tinuvin 477" (manufactured by BASF Japan), "ADEKA STAB LA-F70" (manufactured by ADEKA), and the like.

The specific wavelength absorption layer 11 further includes an ultraviolet absorbing agent that absorbs light in the wavelength range of 100 nm to 420 nm or less as described above, and thus it is possible to absorb light having a wavelength of 100 nm to 420 nm out of light incident on the specific wavelength absorption layer 11. With this, it is possible to prevent or suppress deterioration of the specific wavelength absorption layer 11 (polycarbonate and light absorbing agent) due to ultraviolet rays and to enhance weather resistance of the optical sheet 1.

A content of the ultraviolet absorbing agent in the specific wavelength absorption layer 11 is preferably 0.05 wt% to 8 wt%, and more preferably 0.07 wt% to 6 wt%. With this, it is possible to reliably exhibit the above effect. In a case where the content is too small, the effect as an ultraviolet absorbing agent may not be sufficiently obtained. On the other hand, in a case where the content is too large, the ultraviolet absorbing agent tends to be easily aggregated.

Here, the content of the ultraviolet absorbing agent in the specific wavelength absorption layer 11 is preferably larger than the content of the light absorbing agent in the specific wavelength absorption layer 11. With this, the optical sheet 1 can absorb light in a specific wavelength range out of visible light, and can also absorb ultraviolet rays. In particular, the light absorbing agent is relatively easily deteriorated by ultraviolet rays, but this deterioration can be prevented. In addition, since the content of the ultraviolet absorbing agent in the specific wavelength absorption layer 11 is larger than the content of the light absorbing agent in the specific wavelength absorption layer 11, the light absorbing agent can more reliably prevent deterioration due to ultraviolet rays.

A ratio A/B of the content A of the light absorbing agent in the specific wavelength absorption layer 11 to the content B of the ultraviolet absorbing agent in the specific wavelength absorption layer 11 is preferably 0.000125 to 0.625, and more preferably 0.00015 to 0.4. With this, the effect of the present invention is more remarkably obtained.

A thickness of the specific wavelength absorption layer 11 is not particularly limited, but is preferably 0.05 mm to 1.5mm, and more preferably 0.3 mm to 0.7 mm. With this, it is possible to enhance handleability and to prevent the optical component as a whole from being unnecessarily thick.

In addition, the specific wavelength absorption layer 11 may be manufactured by stretching or may be manufactured without stretching, but the stretching degree is preferably 10% or less, and more preferably 5% or less. With this, it is possible to prevent or suppress occurrence of color unevenness, unevenness of a light absorbing agent, and unevenness of an ultraviolet absorbing agent during stretching.

In a case where a melting point of polycarbonate is denoted by T1 and a melting point of a light absorbing agent is denoted by T2, it is preferable that T1 <T2 is satisfied. With this, in a case where the polycarbonate in a molten state and the light absorbing agent are mixed with each other, it is possible to prevent the light absorbing agent from being the light absorber can be prevented from being changed in quality or discolored by heat.

In a case where the melting point of polycarbonate is denoted by T1 and the melting point of the ultraviolet absorbing agent is denoted by T3, it is preferable that T1 <T3 is satisfied. With this, in a case where the polycarbonate in a molten state and the light absorbing agent are mixed with each other, it is possible to prevent the ultraviolet absorbing agent from being changed in quality or discolored by heat.

The melting point T1 of the polycarbonate is preferably 250°C to 400°C, and more preferably 270°C to 350°C.

The melting point T2 of the light absorbing agent is 300°C to 400°C, and more preferably 330°C to 360°C. In addition, the melting point T3 of the ultraviolet absorbing agent is preferably 310°C to 370°C, and more preferably 340°C to 360°C. By setting the melting points T1 to T3 within the above numerical value range, it is possible to reliably exhibit the above effect.

The light absorbing agent may be a coloring agent different from the coloring agents exemplified above. The coloring agent is not particularly limited, and examples thereof include a pigment, a dye, and the like, and these can be used alone or used by being mixed together. In addition, it is possible to use the coloring agent by being mixed with those described above.

The pigment is not particularly limited, and examples thereof include phthalocyanine-based pigments such as phthalocyanine green and phthalocyanine blue, azo-based pigments such as fast yellow, disazo yellow, condensed azo yellow, penzoimidazolone yellow, dinitroaniline orange, penzimidazolone orange, toluidine red, permanent carmine, permanent red, naphthol red, condensed azo red, benzimidazolone carmine, and benzimidazolone brown, anthraquinone-based pigments such as anthrapyrimidine yellow and anthraquinonyl red, azomethine-based pigments such as copper azomethine yellow, quinophthalone-based pigments such as quinophthalone yellow, isoindoline-based pigments such as isoindoline yellow, nitroso-based pigments such as nickel dioxime yellow, perinone-based pigments such as perinone orange, quinacridone-based pigments such as quinacridone magenta, quinacridone maroon, quinacridone scarlet, and quinacridone red, perylene red, perylene-based pigments such as perylene maroon, pyrrolopyrrole-based pigments such as diketopyrrolopyrrole red, organic pigments such as dioxazine-based pigments such as dioxazine violet, carbon-based pigments such as carbon black, lamp black, furnace black, ivory black, graphite, and fullerene, chromate-based pigments such as chrome yellow and molybdate orange, sulfide-based pigments such as cadmium yellow, cadmium lithopone yellow, cadmium orange, cadmium lithopone orange, silver vermilion, cadmium red, cadmium lithopone red, and sulfidation, oxide-based pigments such as ocher, titanium yellow, titanium barium nickel yellow, red iron, lead red, amber, brown iron oxide, zinc iron chrome brown, chromium oxide, cobalt green, cobalt chrome green, titanium cobalt green, cobalt blue, cerulean blue, cobalt aluminum chrome blue, and iron black, manganese ferrite black, cobalt ferrite black, copper chromium black, and copper chromium manganese black, hydroxide-based pigments such as viridian, ferrocyanide-based pigments such as Prussian blue, silicate-based pigments such as ultramarine blue, phosphate-based pigments such as cobalt violet and mineral violet, and inorganic pigments such as others (for example, cadmium sulfide, cadmium selenide, and the like), and the like, and one or two or more of these can be used in combination.

The dye is not particularly limited, and examples thereof include metal complex coloring agent, cyan-based coloring agent, xanthene-based coloring agent, azo-based coloring agent, hibiscus coloring agent, blackberry coloring agent, raspberry coloring agent, pomegranate juice coloring agent, chlorophyll coloring agent, porphyrin-based compounds such as tetraazoporphyrin compound, merocyanine dye, and the like, and one or two or more of these can be used in combination.

Among these, the light absorbing agent preferably contains at least one selected from the group consisting of a phthalocyanine-based pigment, a porphyrin compound, and a merocyanine dye. With this, the effect of the present invention is more remarkably obtained.

Subsequently, a method for manufacturing an optical sheet and a method for manufacturing an optical component will be described. Hereinafter, a case where an optical sheet is manufactured using an extrusion method will be described as an example.

### (Method for manufacturing optical sheet)

First, an optical sheet manufacturing apparatus used in the present manufacturing method will be described.

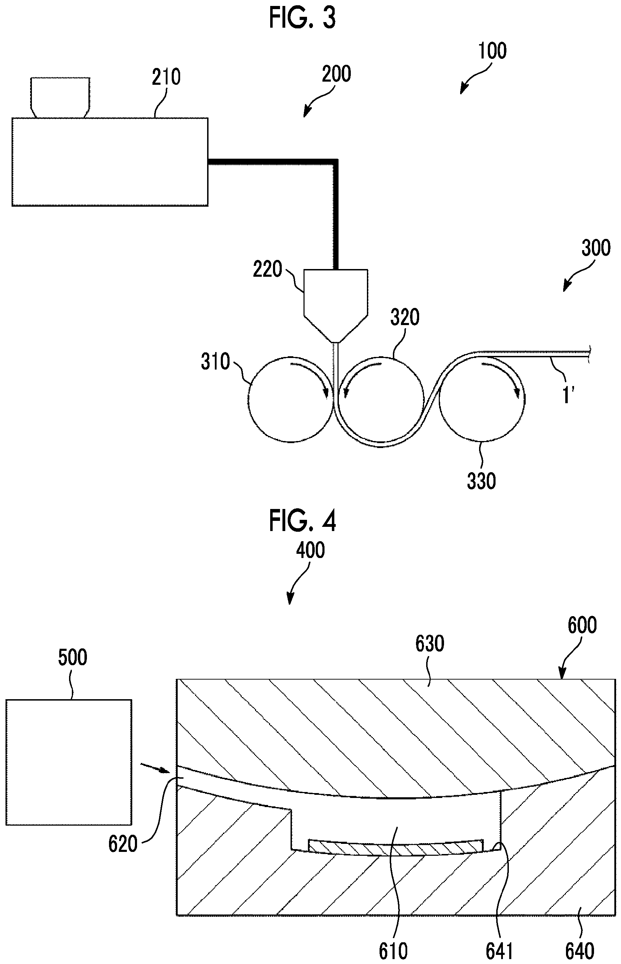

FIG. 3 is a side view schematically showing an optical sheet manufacturing apparatus for manufacturing the optical sheet shown in FIG. 1. FIG. 4 is a sectional view schematically showing an optical component manufacturing apparatus for manufacturing the optical sheet optical component shown in FIG. 1. In the following description, the upper side in FIG. 4 is referred to as "upper", and the lower side is referred to as "lower".

The optical sheet manufacturing apparatus 100 shown in FIG. 3 includes a sheet supply unit 200 and a sheet molding unit 300.

In the present embodiment, the sheet supply unit 200 includes an extruder 210 and a T-die 220 connected to a molten resin discharge unit of the extruder 210 via a pipe. A belt-shaped sheet 1' in a molten state or a softened state is supplied to the sheet molding unit 300 by the T-die 220.

The T-die 220 is an extrusion forming unit that extrudes the sheet 1' in a molten state or a softened state by an extrusion method in a state of a belt-shaped sheet. A constituent material constituting the optical sheet 1 described above is loaded in the T-die 220 in a molten state, and by extruding the material in the molten state from the T-die 220, the belt-shaped sheet 1' is continuously fed.

The sheet molding unit 300 includes a touch roll 310, a cooling roll 320, and a post-stage cooling roll 330. Each of these rolls is configured to rotate independently by a motor (driving means) (not illustrated), and is continuously fed by being cooled by the rotation of these rolls. By continuously feeding the sheet 1' into the sheet molding unit 300, a surface of the sheet 1' is flattened, and the sheet 1' is set to a desired thickness and cooled. The cooled sheet 1' is cut into a predetermined length to obtain an optical sheet 1.

The optical sheet of the present embodiment is manufactured by the optical sheet manufacturing method using the optical sheet manufacturing apparatus 100 as described above.

Manufacturing of the optical sheet includes an extrusion step, a molding step, and a cooling step.

First, a belt-shaped sheet 1' in a molten state or a softened state is extruded (an extrusion step). In this extrusion step, the constituent material of the optical sheet 1 (polycarbonate, light absorbing agent, ultraviolet absorbing agent, and the like) are loaded into the extruder 210. In addition, the constituent material of the optical sheet 1 is in a molten or softened state in the extruder 210. Here, as described above, in the present invention, since the polycarbonate has a viscosity average molecular weight Mv of 24,000 to 27,500 , the polycarbonate, the light absorbing agent, and the ultraviolet absorbing agent are in a sufficiently mixed state. By extruding these in a sufficiently mixed state, in the optical sheet 1 obtained through a molding step and a cooling step described below, it is possible to prevent the light absorbing agent and the ultraviolet absorbing agent from being excessively aggregated.

Subsequently, the surface of the sheet 1' is flattened, and the sheet 1' is set to a predetermined thickness (molding step) . The present step is performed between the touch roll 310 and the cooling roll 320.

Subsequently, the surface of the sheet 1' is cooled (cooling step). The present step is performed between the cooling roll 320 and the post-stage cooling roll 330.

It is possible to obtain the optical sheet 1 through the above steps. Subsequently, a method for manufacturing an optical component will be described.

### (Method for manufacturing optical component)

First, an optical component manufacturing apparatus used in the present manufacturing method will be described.

The optical component manufacturing apparatus 400 shown in FIG. 4 includes a resin supply unit 500 and a mold 600. The resin supply unit 500 is filled with the above-described polycarbonate. The mold 600 has a cavity 610 and a supply port 620 communicating inside and outside the cavity 610. In addition, the mold 600 includes an upper member 630 and a lower member 640, and in a state where these components are assembled, the mold 600 that defines the optical component manufacturing apparatus 400 is configured.

The optical component manufacturing apparatus of the present embodiment is manufactured by a manufacturing method of the optical sheet manufacturing apparatus using the optical component manufacturing apparatus 400 as described above.

The method for manufacturing an optical component includes an optical sheet arranging step and a lens material supplying step.

First, in a state where the upper member 630 and the lower member 640 are disassembled, the optical sheet 1 is arranged on a bottom surface 641 of the lower member 640 (optical sheet arranging step). The bottom surface 641 is a curved concave surface, and with this, it is possible to form a curved surface on the lens 4. In addition, the optical sheet 1 has flexibility, and thus is arranged according to the shape of the bottom surface 641.

Subsequently, the upper member 630 and the lower member 640 are in an assembled state, and a lens material in a molten state or a softened state is poured through the supply port 620 (lens material supply step). By cooling the lens material in a molten state or a softened state, it is possible to obtain a laminate in which the optical sheet 1 and the lens are laminated.

In the above description, a so-called sheet insert method has been described as an example. However, the present invention is not limited thereto. For example, the optical sheet 1 may be laminated on the molded lens via an adhesive.

### <Second embodiment>

FIG. 6 is a sectional view of an optical component including the optical sheet (second embodiment) of the present invention.

Hereinafter, a second embodiment of the optical sheet and the optical component of the present invention will be described with reference to the drawing, but the description will be focused on the differences from the above-described embodiment, and the description of the same matters will be omitted.

The present embodiment is the same as the first embodiment except that a polarized film is provided.

### (Polarized film)

As shown in FIG. 6, the optical sheet 1A further includes a polarized film 12 and an adhesive layer 13. The polarized film 12 is laminated on the specific wavelength absorption layer 11 via the adhesive layer 13. In the illustrated configuration, the polarized film 12 is arranged on a lens 4 side.

The polarized film 12 has a function of extracting linearly polarized light having a polarization plane in one predetermined direction from incident light (natural light that is not polarized). With this, the incident light incident on the eye via the optical sheet 1 is polarized.

A polarization degree of the polarized film 12 is not particularly limited, but is preferably 50% to 100%, and more preferably 80% to 100%, for example. In addition, visible light transmittance of the polarized film 12 is not particularly limited, but is preferably 10% to 80%, and more preferably 20% to 50%, for example.

The constituent material of the polarized film 12 is not particularly limited as long as the material has the above function. Examples thereof include a material obtained by adsorbing and dyeing a dichroic substance such as iodine or dichroic dye on a polymer film configured of polyvinyl alcohol (PVA), partially formalized polyvinyl alcohol, polyethylene vinyl alcohol, polyvinyl butyral, polycarbonate, a partially saponified product of ethylene-vinyl acetate copolymer, and the like, and performing uniaxial stretching, a polyene-based oriented film such as a dehydrated product of polyvinyl alcohol and a dechlorinated product of polyvinyl chloride, and the like.

Among these, the polarized film 12 is preferably a film obtained by adsorbing and dyeing iodine or a dichroic dye on a polymer film containing polyvinyl alcohol (PVA) as a main material, and performing uniaxial stretching. Polyvinyl alcohol (PVA) is a material that is excellent in transparency, heat resistance, affinity for iodine or a dichroic dye which is a dyeing agent, and orientation during stretching. Therefore, the polarized film 12 mainly formed of PVA has excellent heat resistance and excellent polarizing function.

Examples of the dichroic dye include chloratin fast red, congo red, brilliant blue 6B, benzoperpurine, chlorazole black BH, direct blue 2B, diamine green, chrysophenone, sirius yellow, direct fast red, acid black, and the like.

A thickness of the polarized film 12 is not particularly limited, and is preferably 5 µm to 60 µm, and more preferably 10 µm to 40 µm, for example.

The adhesive (or pressure-sensitive adhesive) constituting the adhesive layer 13 is not particularly limited, and examples thereof include an acrylic adhesive, a urethane adhesive, an epoxy adhesive, a silicone adhesive, and the like.

Among these, the urethane-based adhesive is preferable. With this, it is possible to make transparency, adhesion strength, and durability of the adhesive layer 13 further excellent, and to make properties of following a change in shape particularly excellent.

According to this embodiment, the same effects as those of the first embodiment can be obtained, and the present embodiment has a polarization function.

For example, each unit constituting the optical sheet of the present invention can be replaced with an arbitrary constituent element exhibiting the same function.

In addition, the optical sheet of the present invention may have an arbitrary constituent component in addition to the above-described configuration.

More specifically, for example, the optical sheet of the present invention may include a protective layer for protecting a surface, an intermediate layer, a power adjustment layer for adjusting the power as a lens, and the like.

### Examples

Hereinafter, the present invention will be described more specifically based on examples. Reference Examples will are marked in Table 1 by an asterisk (*).

### 1. Examination of optical sheet

### 1-1. Preparation of optical sheet

### [Example 1 not according to the invention]

[1] First, 100 parts by mass of a bisphenol A-type polycarbonate ("Lupilon E2000F E5111" manufactured by Mitsubishi Gas Chemical Company), 0.04 parts by mass of a light absorbing agent ("FDG-005" manufactured by Yamada Chemical Industries, Ltd.), and 0.4 parts by mass of an ultraviolet absorbing agent ("ADEKA STAB LA-31G" manufactured by ADEKA Corporation) were stirred and mixed to prepare an optical sheet forming material.
[2] Subsequently, the optical sheet forming material was accommodated in an extruder 210 of the optical sheet manufacturing apparatus 100 shown in FIG. 3, melted, and extrusion-molded by a T-die 220 to obtain a sheet material. The sheet material was cooled and molded by a sheet molding unit 300, and cut into a rectangular shape having an average thickness of 0.3 mm and a size of 500 mm × 500 mm in plan view to prepare an optical sheet.

The viscosity average molecular weight Mv of the polycarbonate is 27,000, the melting point T1 is 250°C, the melt flow rate measured in accordance with JISK7210 is 5.3 g/10 min, and the water absorption rate measured by Aquatrac 3E (manufactured by Brabender Corporation) was 0.05%. In addition, the melting point T2 of the light absorbing agent was 440°C. In addition, the melting point T3 of the ultraviolet absorbing agent was 200°C.

### [Example 2 not according to the invention]

An optical sheet of Example 2 was obtained in the same manner as in Example 1 except that the configuration of the optical sheet was changed as shown in Table 1.

### [Example 3 not according to the invention]

An optical sheet of Example 3 was obtained in the same manner as in Example 1 except that the configuration of the optical sheet was changed as shown in Table 1.

### [Example 4 not according to the invention]

An optical sheet of Example 4 was obtained in the same manner as in Example 1 except that the configuration of the optical sheet was changed as shown in Table 1.

### [Example 5 according to the invention]

An optical sheet of Example 5 was obtained in the same manner as in Example 1 except that the configuration of the optical sheet was changed as shown in Table 1.

### [Example 6 according to the invention]

An optical sheet of Example 6 was obtained in the same manner as in Example 1 except that the configuration of the optical sheet was changed as shown in Table 1.

### [Example 7 not according to the invention]

An optical sheet of Example 7 was obtained in the same manner as in Example 1 except that the configuration of the optical sheet was changed as shown in Table 1.

### [Example 8 according to the invention]

An optical sheet of Example 8 was obtained in the same manner as in Example 1 except that the configuration of the optical sheet was changed as shown in Table 1.

### [Example 9 not according to the invention]

An optical sheet of Example 9 was obtained in the same manner as in Example 1 except that the configuration of the optical sheet was changed as shown in Table 1.

### [Example 10 not according to the invention]

An optical sheet of Example 10 was obtained in the same manner as in Example 1 except that the configuration of the optical sheet was changed as shown in Table 1.

### [Example 11 not according to the invention]

An optical sheet of Example 11 was obtained in the same manner as in Example 1 except that the configuration of the optical sheet was changed as shown in Table 1.

### [Example Z 12 not according to the invention]

An optical sheet of Example 12 was obtained in the same manner as in Example 1 except that the configuration of the optical sheet was changed as shown in Table 1.

### Example 13 not according to the invention]

An optical sheet of Example 13 was obtained in the same manner as in Example 1 except that the configuration of the optical sheet was changed as shown in Table 1.

### [Comparative Example 1]

An optical sheet of Comparative Example 1 was obtained in the same manner as in Example 1 except that the configuration of the optical sheet was changed as shown in Table 1.

### [Comparative Example 2]

An optical sheet of Comparative Example 2 was obtained in the same manner as in Example 1 except that the configuration of the optical sheet was changed as shown in Table 1.

### [Comparative Example 3]

An optical sheet of Comparative Example 3 was obtained in the same manner as in Example 1 except that the configuration of the optical sheet was changed as shown in Table 1.

### [Comparative Example 4]

An optical sheet of Comparative Example 4 was obtained in the same manner as in Example 1 except that the configuration of the optical sheet was changed as shown in Table 1.

In Table 1, a1 represents polycarbonate ("E2000FN E5100" manufactured by Mitsubishi Gas Chemical Company), a2 represents polycarbonate ("H3000" manufactured by Mitsubishi Gas Chemical Company), a3 represents polycarbonate ("200-3NAT" manufactured by Sumika Polycarbonate Limited), a4 represents polycarbonate ("S2000" manufactured by Mitsubishi Gas Chemical Company), and a5 represents polycarbonate ("1300-03" manufactured by EG Corporation).

In addition, in Table 1, b1 represents a light absorbing agent ("FDG-005" manufactured by Yamada Chemical Industry Co., Ltd.), b2 represents a light absorbing agent ("FDG-002" manufactured by Yamada Chemical Industry Co., Ltd.), b3 represents a light absorbing agent ("FDB-001" manufactured by Yamada Chemical Industry Co., Ltd.), b4 represents a light absorbing agent ("FDR-002" manufactured by Yamada Chemical Industry Co., Ltd.), and b5 represents a light absorbing agent ("FDR-005" manufactured by Yamada Chemical Industry Co., Ltd.) .

In addition, in Table 1, c represents an ultraviolet absorbing agent ("ADEKA STAB LA-31G" manufactured by ADEKA Corporation).

### 1-2. Evaluation

The optical sheet of each example and each comparative example was evaluated by the following methods.

### (Aggregability evaluation)

Observation was performed using a digital microscope ("VHX-1000" manufactured by Keyence Corporation), a size of the aggregate was measured, and evaluation was performed as follows.

A: The size of the aggregate is less than 0.05 mm².
B: The size of the aggregate is equal to or more than 0.05 mm² and less than 0.1 mm².
C: The size of the aggregate is equal to or more than 0.1 mm² and less than 0.5 mm².
D: The size of the aggregate is equal to or more than 0.5 mm².

### (Strength evaluation)

Charpy impact strength was measured in accordance with ISO179-1 and ISO179-2, and evaluated as follows.

A: Equal to or more than 80 KJ/m².
B: Equal to or more than 50 KJ/m² and less than 80 KJ/m².
C: Equal to or more than 25 KJ/m² and less than 50 KJ/m².
D: Less than 25 KJ/m².

### (Weather resistance evaluation)

A xenon lamp (7.5 kw, output: 1.728 MJ/m²) (light source filter: daylight filter, irradiance: broadband (300 to 400 nm), 60 ± 2 W/ m²) was irradiated for 8 hours, and a yellowing degree (ΔYI) was evaluated as follows.

A: Appearance was not changed at ΔYI of less than 1.0.
B: Appearance was changed a little at ΔYI of equal to or more than 1.0 and less than 2.0.
C: A change in appearance was observed at ΔYI of equal to or more than 2.0 and less than 3.0.
D: A change in appearance was remarkably observed at ΔYI of equal to or more than 3.0.

Table 1 below shows evaluation results of the optical sheet of each example and each comparative example obtained as described above.

**[Table 1]**

| | | | Example 1* | Example 2* | Example 3* | Example 4* | Example 5 | Example 6 | Example 7* | E Example 8 | Example 9* | Example 10* | Example 11* | Example 12* | Example 13* | Comparative Example 1 | Comparative Example 2 | Comparative Example 3 | Comparative Example 4 |
|---|---|---|---|---|---|---|---|---|---|---|---|---|---|---|---|---|---|---|---|
| | | Type | a1 | a2 | a3 | a4 | al | al | al | al | al | al | al | al | al | al | a5 | al | a5 |
| | | Content (wt%) | 100 | 100 | 100 | 100 | 100 | 100 | 100 | 100 | 100 | 100 | 100 | 100 | 100 | 100 | 100 | 100 | 100 |
| | | Viscosity average molecular weight (Mv) | 2700 | 20000 | 30000 | 23000 | 27000 | 27000 | 27000 | 27000 | 27000 | 27000 | 27000 | 27000 | 27000 | 19000 | 31000 | 19000 | 31000 |
| | Polycarbonate | Water adsorptio n rate (%) | 0.05 | 0.05 | 0.05 | 0.05 | 0.05 | 0.05 | 0.02 | 0.05 | 0.02 | 0.05 | 0.05 | 0.05 | 0.05 | 0.01 | 0.05 | 0.01 | 0.05 |
| | | Melt flow rate | 5.3 | 28 | 3 | 9 | 5.3 | 5.3 | 5.3 | 5.3 | 5.3 | 5.3 | 5.3 | 5.3 | 5.3 | 5.3 | 2 | 5.3 | 2 |
| Specific wavelength absorption layer | | (g/10 min) Melting point T1 (°C) | 250 | 250 | 250 | 250 | 250 | 250 | 250 | 250 | 250 | 250 | 250 | 250 | 250 | 250 | 250 | 250 | 250 |
| | | Type | bl | bl | bl | bl | b2 | b3 | bl | b3 | bl | b4 | b5 | b4 | b5 | bl | bl | bl | bl |
| | Light absorbing agent | Content (wt%) | 0.04 | 0.04 | 0.04 | 0.04 | 0.04 | 0.04 | 0.04 | 0.03 | 5 | 0.04 | 0.04 | 5 | 5 | 0.04 | 0.04 | 0.04 | 0.04 |
| | | Melting point T2 (°C) | 440 | 440 | 440 | 440 | 300 | 370 | 440 | 370 | 440 | 440 | 440 | 440 | 440 | 440 | 440 | 440 | 440 |
| | | Type | c | c | c | c | c | c | c | c | c | c | c | c | c | c | c | - | c |
| | Ultraviolet absorbing agent | Content (wt%) | 0.4 | 0.4 | 0.4 | 0.4 | 0.4 | 0.4 | 0.4 | 0.05 | 8 | 0.4 | 0.4 | 8 | 8 | 0.4 | 0.4 | - | 0.004 |
| | | Melting point T3 (°C) | 200 | 200 | 200 | 200 | 200 | 200 | 200 | 200 | 200 | 200 | 200 | 200 | 200 | 200 | 200 | - | 200 |
| | | | 0.1 | 0.1 | 0.1 | 0.1 | 0.1 | 0.1 | 0.1 | 0.6 | 0.625 | 0.1 | 0.1 | 0.625 | 0.625 | 0.1 | 0.1 | - | 10 |
| Evaluation | Aggregabi lity | | A | A | B | A | A | A | B | A | B | A | B | A | B | C | D | C | D |
| | Streng th | | A | B | A | A | A | A | A | A | A | A | A | A | A | A | A | A | A |
| | Weather res istance | | A | A | A | A | A | A | A | A | A | A | A | A | A | A | A | D | C |

As shown in Table 1, the optical sheet in each example exhibited strength equal to or higher than that of each comparative example, and there was obtained a result in which formation of an aggregate in each comparative example was suppressed.

### 2. Examination of weather resistance of light absorbing agent itself

### 2-1. Preparation of optical sheet

### [Example A not according to the invention]

[1] First, 100 parts by mass of an acrylic resin ("SUMIPEX MG5" manufactured by Sumitomo Chemical Co., Ltd.), 0.04 parts by mass of a light absorbing agent ("FDG-005" manufactured by Yamada Chemical Industry Co., Ltd.), and 0.4 parts by mass of an ultraviolet absorbing agent ("ADEKA STAB LA-31G" manufactured by ADEKA Corporation) were stirred and mixed to prepare an optical sheet forming material.
[2] Subsequently, the optical sheet forming material was accommodated in the extruder 210 of the optical sheet manufacturing apparatus 100 shown in FIG. 3, melted, and extrusion-molded by the T-die 220 to obtain a sheet material. The sheet material was cooled and molded by a sheet molding unit 300, and cut into a rectangular shape having an average thickness of 0.3 mm and a size of 500 mm × 500 mm in plan view to prepare an optical sheet.

### [Example B not according to the invention]

An optical sheet of Example B was obtained in the same manner as in Example A, except that the configuration of the optical sheet was changed as shown in Table 2.

### [Example C not according to the invention]

An optical sheet of Example C was obtained in the same manner as in Example A, except that the configuration of the optical sheet was changed as shown in Table 2.

### [Example D not according to the invention]

An optical sheet of Example D was obtained in the same manner as in Example A, except that the configuration of the optical sheet was changed as shown in Table 2.

### [Example E not according to the invention]

An optical sheet of Example E was obtained in the same manner as in Example A, except that the configuration of the optical sheet was changed as shown in Table 2.

### [Comparative Example A]

An optical sheet of Comparative Example A was obtained in the same manner as in Example A, except that the configuration of the optical sheet was changed as shown in Table 2.

In Table 2, b1 represents a light absorbing agent ("FDG-005" manufactured by Yamada Chemical Industry Co., Ltd.), and in Table 1, b2 represents a light absorbing agent ("FDG-002" manufactured by Yamada Chemical Industry Co., Ltd.).

In addition, in Table 2, c represents an ultraviolet absorbing agent ("ADEKA STAB LA-31G" manufactured by ADEKA Corporation).

### 2-2. Evaluation

The optical sheets of each example and each comparative example were evaluated by the following methods.

### (Weather resistance evaluation of light absorbing agent)

Using a UV tester ("SUV-W161" manufactured by Iwasaki Electric Co., Ltd.), each optical sheet is irradiated with ultraviolet light for 48 hours at an irradiation amount of 150 mW/cm², and then transmittance of a peak top of the light absorbing agent was measured with a spectrophotometer. The difference between the peak top transmittance of the light absorbing agent before the test and the peak top transmittance of the light absorbing agent after the test was calculated and evaluated as follows.

A: Difference in transmittance is less than 3%
B: Difference in transmittance is equal to or more than 3% and less than 5%
C: Difference in transmittance is equal to or more than 5% and less than 10%
D: Difference in transmittance is equal to or more than 10%

Table 2 below shows the evaluation result of the optical sheet of each example and each comparative example obtained as described above.

**[Table 2]**

| | | Example A* | Example B* | Example C* | Example D* | Example E* | Comparative Example A |
|---|---|---|---|---|---|---|---|
| Light absorbing agent | Type | bl | bl | bl | b2 | bl | bl |
| | Content (wt%) | 0.04 | 0.001 | 5 | 0.04 | 0.005 | 0.04 |
| | Melting point T2 (°C) | 440 | 440 | 440 | 440 | 440 | 440 |
| Ultraviolet absorbing agent | Type | c | c | c | c | c | - |
| | Content (wt%) | 0.4 | 8 | 8 | 0.4 | 0.04 | - |
| | Melting point T3 (°C) | 200 | 200 | 200 | 200 | 200 | - |
| Content ratio | | 0.1 | 0.000125 | 0.625 | 0.1 | 0.125 | - |
| Evaluation | Weather resistance of light absorbing agent | B | A | A | B | C | D |

As shown in Table 2, there was a result in which the optical sheet in each example was more excellent in weather resistance than the comparative example. In the above description, the evaluation was performed using an acrylic resin ("SUMIPEX MG5" manufactured by Sumitomo Chemical Co., Ltd.) instead of the polycarbonate. However, it was recognized that in order to more remarkably perform the weather resistance evaluation of the light absorbing agent, the same tendency was obtained even using polycarbonate.

### Industrial Applicability

The optical sheet of the present invention has a specific wavelength absorption layer that contains a polycarbonate as a main material and a light absorbing agent that absorbs light of a specific wavelength, out of light in a wavelength range of 350 nm or more and 740 nm or less. The polycarbonate has a viscosity average molecular weight Mv of 24, 000 to 27,500. With this, the optical sheet can absorb light in a specific wavelength range among visible light. In addition, since the viscosity average molecular weight Mv of the polycarbonate is 24, 000 to 27,500 for example, at a time of extrusion molding, extrusion molding can be performed in a state where the polycarbonate and the light absorbing agent are sufficiently mixed with each other. Therefore, it is possible to prevent a state where the light absorbing agent is excessively aggregated after molding. In addition, since the viscosity average molecular weight Mv of the polycarbonate is 24,000 to 27,500 the optical sheet has sufficient strength. As described above, the optical sheet of the present invention prevents aggregation of the light absorbing agent and sufficient strength.

### Reference Signs List

- 1: Optical sheet
- 1': Sheet
- 1A: Optical sheet
- 2: Frame
- 3: Lens with optical sheet
- 4: Lens
- 5: Mounting portion
- 6: Collar
- 7: Light transmitting member
- 10: Optical component
- 10': Optical component
- 11: Specific wavelength absorption layer
- 12: Polarized film
- 13: Adhesive layer
- 21: Rim portion
- 22: Bridge portion
- 23: Temple portion
- 24: Nose pad portion
- 100: Optical sheet manufacturing apparatus
- 200: Sheet supply unit
- 210: Extruder
- 211: Molten resin discharge unit
- 212: Pipe
- 220: T-die
- 300: Sheet molding unit
- 310: Touch roll
- 320: Cooling roll
- 330: Post-stage cooling roll
- 400: Optical component manufacturing apparatus
- 500: Resin supply unit
- 600: Mold
- 610: Cavity
- 620: Supply port
- 630: Upper member
- 640: Lower member
- 641: Bottom surface
- 22: Bridge portion
- 23: Temple portion
- 24: Nose pad portion
- 100: Optical sheet manufacturing apparatus
- 200: Sheet supply unit
- 210: Extruder
- 211: Molten resin discharge unit
- 212: Pipe
- 220: T-die
- 300: Sheet molding unit
- 310: Touch roll
- 320: Cooling roll
- 330: Post-stage cooling roll
- 400: Optical component manufacturing apparatus
- 500: Resin supply unit
- 600: Mold
- 610: Cavity
- 620: Supply port
- 630: Upper member
- 640: Lower member
- 641: Bottom surface

## Claims

1. (Currently amended) An optical sheet (1) comprising:
a specific wavelength absorption layer (11) that contains a bisphenol type polycarbonate having a skeleton derived from bisphenol as a main material and a light absorbing agent that absorbs light of a specific wavelength out of light in a wavelength range of 350 nm to 740 nm,
being **characterized in that** the light absorbing agent includes a light absorbing agent having a melting point of 300°C to 400°C,
the polycarbonate has a viscosity average molecular weight Mv of 24,000 to 27,500, and
the polycarbonate has a melt flow rate of 3 g/10 min to 25 g/10 min measured in accordance with JIS K7210.

2. The optical sheet (1) according to Claim 1, wherein in a case where a melting point of the polycarbonate is denoted by T1 and the melting point of the light absorbing agent is denoted by T2, T1 < T2 is satisfied.

3. The optical sheet (1) according to Claim 1 or 2, wherein a content of the light absorbing agent in the specific wavelength absorption layer (11) is 0.001 wt% to 5 wt%.

4. The optical sheet (1) according to any one of Claims 1 to 3,
wherein the specific wavelength absorption layer (11) further includes an ultraviolet absorbing agent that absorbs light in a wavelength range of 100 nm to 420 nm.

5. The optical sheet (1) according to Claim 4, wherein a content of the ultraviolet absorbing agent in the specific wavelength absorption layer (11) is 0.05 wt% to 8 wt%.

6. The optical sheet (1) according to Claim 4 or 5, wherein a ratio A/B of a content A of the light absorbing agent in the specific wavelength absorption layer (11) to a content B of the ultraviolet absorbing agent in the specific wavelength absorption layer (11) is 0.000125 to 0.625.

7. The optical sheet (1) according to any one of Claims 1 to 6,
wherein the light absorbing agent includes at least one selected from the group consisting of a phthalocyanine-based pigment, a porphyrin-based compound, and a merocyanine dye.

8. An optical component (10) comprising:
a substrate (4 or 7); and
the optical sheet (1) according to any one of Claims 1 to 7, which is laminated on the substrate (4 or 7).

## Patentansprüche

1. Optische Folie (1) umfassend:
eine Absorptionsschicht mit einer spezifischen Wellenlänge (11), die als Hauptmaterial ein Polycarbonat vom Bisphenol-Typ mit einem von Bisphenol abgeleiteten Gerüst und ein lichtabsorbierendes Mittel, das Licht einer spezifischen Wellenlänge aus Licht in einem Wellenlängenbereich von 350 nm bis 740 nm absorbiert, enthält,
**dadurch gekennzeichnet, dass** das lichtabsorbierende Mittel ein lichtabsorbierendes Mittel mit einem Schmelzpunkt von 300°C bis 400°C umfasst,
das Polycarbonat ein viskositätsmittleres Molekulargewicht Mv von 24.000 bis 27.500 aufweist und
das Polycarbonat eine Schmelzflussrate von 3 g/10 min bis 25 g/10 min, gemessen gemäß JIS K7210, aufweist.

2. Optische Folie (1) nach Anspruch 1,
wobei in einem Fall, in dem ein Schmelzpunkt des Polycarbonats mit T1 bezeichnet wird und der Schmelzpunkt des lichtabsorbierenden Mittels mit T2 bezeichnet wird, T1 < T2 erfüllt ist.

3. Optische Folie (1) nach Anspruch 1 oder 2,
wobei ein Gehalt des lichtabsorbierenden Mittels in der Absorptionsschicht mit spezifischer Wellenlänge (11) 0,001 Gew.-% bis 5 Gew.-% beträgt.

4. Optische Folie (1) nach einem der Ansprüche 1 bis 3,
wobei die Absorptionsschicht mit spezifischer Wellenlänge (11) ferner ein Ultraviolett-absorbierendes Mittel enthält, das Licht in einem Wellenlängenbereich von 100 nm bis 420 nm absorbiert.

5. Optische Folie (1) nach Anspruch 4,
wobei ein Gehalt des Ultraviolett-absorbierenden Mittels in der Absorptionsschicht mit spezifischer Wellenlänge (11) 0,05 Gew.-% bis 8 Gew.-% beträgt.

6. Optische Folie (1) nach Anspruch 4 oder 5,
wobei ein Verhältnis A/B eines Gehalts A des lichtabsorbierenden Mittels in der Absorptionsschicht mit spezifischer Wellenlänge (11) zu einem Gehalt B des Ultraviolett-absorbierenden Mittels in der Absorptionsschicht mit spezifischer Wellenlänge (11) 0,000125 bis 0,625 beträgt.

7. Optische Folie (1) nach einem der Ansprüche 1 bis 6,
wobei das lichtabsorbierende Mittel mindestens eines, ausgewählt aus der Gruppe bestehend aus einem Phthalocyanin-basierten Pigment, einer Porphyrinbasierten Verbindung und einem Merocyanin-Farbstoff, enthält.

8. Optische Komponente (10), umfassend:
ein Substrat (4 oder 7); und
die optische Folie (1) nach einem der Ansprüche 1 bis 7, die auf das Substrat (4 oder 7) laminiert ist.

## Revendications

1. Feuille optique (1) comportant:
une couche d'absorption de longueur d'onde spécifique (11) qui contient un polycarbonate de type bisphénol ayant un squelette dérivé du bisphénol en tant que matériau principal et un agent absorbeur de lumière qui absorbe la lumière d'une longueur d'onde spécifique dans une gamme de longueurs d'onde de lumière de 350 nm à 740 nm,
**caractérisée en ce que** l'agent absorbeur de lumière inclut un agent absorbeur de lumière ayant un point de fusion de 300°C à 400 °C,
le polycarbonate a une masse moléculaire moyenne en viscosité Mv de 24 000 à 27 500, et
le polycarbonate a un indice de fluidité à chaud de 3 g/10 min à 25 g/10 min mesuré conformément à la norme JIS K7210.

2. Feuille optique (1) selon la revendication 1,
dans laquelle dans un cas où un point de fusion du polycarbonate est désigné T1 et le point de fusion de l'agent absorbeur de lumière est désigné T2, l'inégalité T1 < T2 est satisfaite.

3. Feuille optique (1) selon la revendication 1 ou 2,
dans laquelle une teneur en agent absorbeur de lumière dans la couche d'absorption de longueur d'onde spécifique (11) est de 0,001 % en poids à 5 % en poids.

4. Feuille optique (1) selon l'une quelconque des revendications 1 à 3,
dans laquelle la couche d'absorption de longueur d'onde spécifique (11) inclut en outre un agent absorbeur d'ultraviolet qui absorbe la lumière dans une gamme de longueurs d'onde de 100 nm à 420 nm.

5. Feuille optique (1) selon la revendication 4,
dans laquelle une teneur en agent absorbeur d'ultraviolet dans la couche d'absorption de longueur d'onde spécifique (11) est de 0,05 % en poids à 8 % en poids.

6. Feuille optique (1) selon la revendication 4 ou 5,
dans laquelle un rapport A/B d'une teneur A en agent absorbeur de lumière dans la couche d'absorption de longueur d'onde spécifique (11) sur une teneur B en agent absorbeur d'ultraviolet dans la couche d'absorption de longueur d'onde spécifique (11) est de 0,000125 à 0,625.

7. Feuille optique (1) selon l'une quelconque des revendications 1 à 6,
dans laquelle l'agent absorbeur de lumière inclut au moins un élément choisi parmi le groupe constitué d'un pigment à base de phthalocyanine, d'un composé à base de porphyrine et d'un colorant mérocyanine.

8. Composant optique (10) comportant :
un substrat (4 ou 7), et
la feuille optique (1) selon l'une quelconque des revendications 1 à 7, qui est stratifiée sur le substrat (4 ou 7).
